(19)

**Europäisches Patentamt**

**European Patent Office**

**Office européen des brevets**

(11) **EP 4 564 281 A1**

(12) **EUROPEAN PATENT APPLICATION**

(43) Date of publication:
04.06.2025 Bulletin 2025/23

(21) Application number: 23213162.3

(22) Date of filing: 29.11.2023

(51) International Patent Classification (IPC):
$G06T\ 1/20^{(2006.01)}$    $G06T\ 3/4015^{(2024.01)}$
$G06T\ 5/00^{(2024.01)}$    $G06T\ 5/70^{(2024.01)}$
$G06T\ 5/73^{(2024.01)}$    $G06T\ 5/90^{(2024.01)}$
$G06T\ 5/94^{(2024.01)}$    $H04N\ 19/00^{(2014.01)}$
$H04N\ 19/42^{(2014.01)}$    $H04N\ 23/84^{(2023.01)}$
$H04N\ 1/407^{(2006.01)}$    $H04N\ 1/409^{(2006.01)}$

(52) Cooperative Patent Classification (CPC):
**H04N 1/407; G06T 3/4007; G06T 5/60; G06T 5/94;**
**H04N 1/409;** H04N 19/85; H04N 23/843

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **ARM Limited**
**Cambridge CB1 9NJ (GB)**

(72) Inventors:
• HANWELL, David
  Cambridge, CB1 9NJ (GB)
• TALAGALA, Dumidu
  Cambridge, CB1 9NJ (GB)

(74) Representative: **EIP**
**Fairfax House**
**15 Fulwood Place**
**London WC1V 6HU (GB)**

(54) **METHOD AND SYSTEM FOR PROCESSING AN IMAGE**

(57) A method for processing an image comprising image data. The image data comprises pixel intensity values, said pixel intensity values being associated with respective pixel locations. For a plurality of zones of the image, based on a plurality of pixel intensity values in the respective zone of the image, a value of a characteristic pertaining to the plurality of pixel intensity values, is determined. At least a spatial filtering process is performed on data representative of the values of the characteristic for the plurality of zones, to obtain filtered values of an image characteristic at respective locations. The filtered values are interpolated from to determine a local value of the image characteristic at a said pixel location. The determining and/or the interpolating is performed using fixed function circuitry. The spatial filtering process is performed using a programmable processor.

Fig. 2

**Description**

Technical Field

The present invention relates to a method for processing an image and in particular, the use of computer processing resources in processing an image.

Background

In image processing, it is often desirable to calculate a local value of an image characteristic at a pixel location. For example, haze and glare are visual effects that can reduce the contrast of an image. It is desirable to adjust the contrast in different regions of the image to address such effects. However, in regions of an image where the measured contrast is low, such as flat, dark regions, raising the contrast level can undesirably make noise more prominent. Therefore, it is pertinent to apply a level of contrast adjustment to the image which varies according to the measured contrast in each region.

To this end, it is desirable to measure the local value of the contrast at each pixel location. The local contrast at a pixel location can be defined as, for example, the maximum pixel intensity value in the region of the pixel divided by the mean of the pixel intensity values in the region. The mean of the pixel intensity values in the region of the pixel thus needs to be measured.

The most desirable way to calculate a local value, such as a local contrast value, can depend on the contents of the image. For example, in astrophotography applications, where haze across the image is expected to be uniform, the contrast adjustment to be applied should be relatively uniform. Meanwhile, in autonomous driving applications, some objects are further away from the image sensor than others, and are hence less affected by haze; in these cases, the contrast stretching should be more tailored to the different regions of the image. A contrast stretching process can be customised if it is implemented in software, by updating the software. However, using customisable software executed by a processor can raise the processing time. In certain applications, such as autonomous driving where an autonomous driving application must quickly identify objects in an image, such an increase in image processing time can be unacceptable.

It is desirable to provide a method for processing an image which is both fast and customisable.

Summary

According to a first aspect of the present invention, there is provided a method for processing an image comprising image data, the image data comprising pixel intensity values, said pixel intensity values being associated with respective pixel locations, the method comprising: for a plurality of zones of the image, determining, based on a plurality of pixel intensity values in the respective zone of the image, a value of a characteristic pertaining to the plurality of pixel intensity values; performing at least a spatial filtering process on data representative of the values of the characteristic for the plurality of zones, to obtain filtered values of an image characteristic at respective locations; and interpolating from the filtered values to determine a local value of the image characteristic at a said pixel location, wherein the determining and/or the interpolating is performed using fixed function circuitry, and the spatial filtering process is performed using a programmable processor.

Optionally, the fixed function circuitry comprises hardware circuitry to form part of an integrated circuit.

Optionally, the programmable processor is configured to decode a plurality of instructions forming an instruction set.

Optionally, performing the spatial filtering process comprises: reading, by the processor, from a memory, a programmable algorithm; and executing, by the processor, the programmable algorithm using the data representative of the values of the characteristic pertaining to the pluralities of pixel intensity values, to obtain the filtered values.

Optionally, the processor comprises a neural processing unit, and performing the spatial filtering process comprises performing, by the neural processing unit: reading, from a memory, data representing a neural network; and applying the neural network to the values of the characteristic pertaining to the pluralities of pixel intensity values, to obtain the filtered values.

Optionally, the method comprises interpolating from the local values to determine local values of the image characteristic at a plurality of said pixel locations.

Optionally, the interpolating comprises bilinear interpolation using four of the filtered values.

Optionally, the pluralities of pixel intensity values in the respective zones are disjoint sets of pixel intensity values.

Optionally, determining the values of the characteristic pertaining to the pluralities of pixel intensity values comprises: receiving the pixel intensity values in a given sequence; and processing the pixel intensity values in the given sequence to determine the values of the characteristic.

Optionally, the image characteristic comprises contrast.

Optionally, the method comprises applying contrast stretching to a target pixel intensity value based on the local value of the contrast at the said pixel location.

Optionally, both the determining and the interpolating are performed using fixed function circuitry.

Optionally, determining the values of the characteristic pertaining to the pluralities of pixel intensity values is performed using fixed function circuitry, and the method comprises determining, based on the values of the characteristic, an exposure value for use in capturing a subsequent image.

According to a second aspect of the present invention, there is provided a system comprising fixed function circuitry and a programmable processor, the system being configured to perform the method of the first aspect, wherein the system is configured to determine the values of the characteristic pertaining to the pluralities of pixel intensity values using the fixed function circuitry, and to perform the spatial filtering process using the programmable processor.

According to a third aspect of the present invention, there is provided a system comprising fixed function circuitry and a programmable processor, the system being configured to perform the method of the first aspect, wherein the system is configured to interpolate from the filtered values using the fixed function circuitry, and to perform the spatial filtering process using the programmable processor.

Brief Description of the Drawings

Figure 1a shows a flow diagram showing a method of image processing according to examples;
Figure 1b shows a flow diagram of a method of image processing according to examples;
Figure 1c shows a flow diagram of a method of image processing according to examples;
Figure 2 shows a schematic diagram of an image signal processor according to examples;
Figure 3 shows an illustration of a Bayer filter according to examples;
Figure 4 shows a schematic diagram of a method of image processing according to examples;
Figure 5 shows a graph illustrating a contrast raising function according to examples;
Figure 6 shows a graph illustrating a contrast stretching function according to examples; and
Figure 7 shows a schematic diagram of a host system according to examples.

Detailed Description

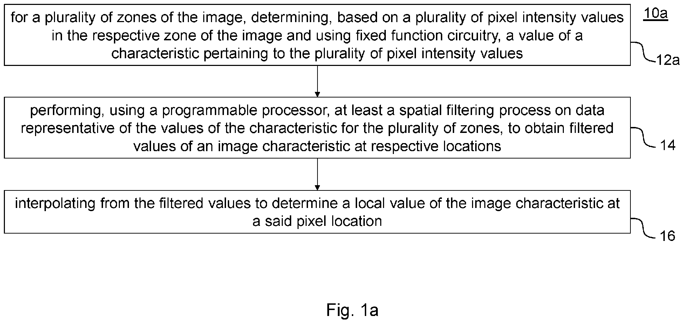

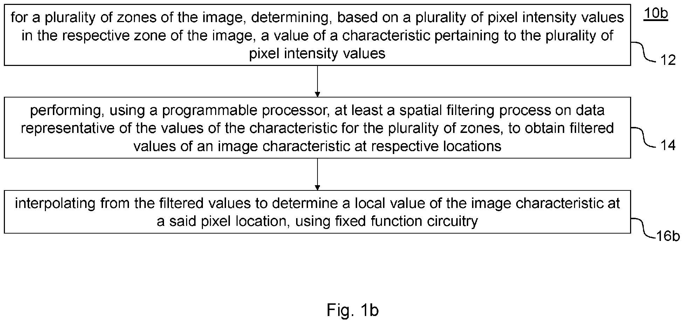

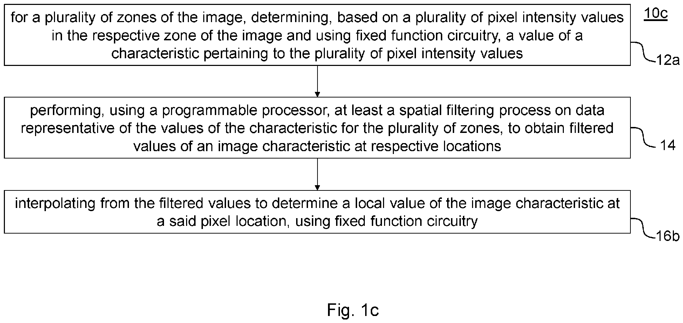

Referring to Figures 1a, 1b and 1c, there are illustrated two methods 10a, 10b, 10c for processing an image comprising image data. The image data comprises pixel intensity values, and the pixel intensity values are associated with respective pixel locations.

In broad overview, the methods each comprise:

- in step 12, for a plurality of zones of the image, determining, based on a plurality of pixel intensity values in the respective zone of the image, a value of a characteristic pertaining to the plurality of pixel intensity values;
- in step 14, performing, using a programmable processor, at least a spatial filtering process on data representative of the values of the characteristic for the plurality of zones, to obtain filtered values of an image characteristic at respective locations; and
- in step 16, interpolating from the filtered values to determine a local value of the image characteristic at a said pixel location 40.

In method 10a, the determining at step 12 is performed using fixed function circuitry, and this step is referred to as step 12a. In method 10b, the interpolating is performed using fixed function circuitry, and this step is referred to as 16b. In method 10c, both the determining at step 12 and the interpolating at step 16 are performed using fixed function circuitry.

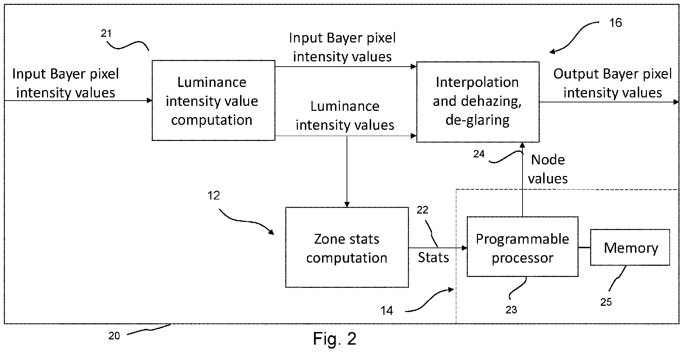

Figure 2 shows an example image signal processor 20 and illustrates aspects of an example method performed by the image signal processor 20. The method may comprise the steps of any of methods 10a, 10b or 10c. The image signal processor 20 may be comprised in a suitable host system 80, such as a smart telephone, a digital camera, or a computer.

Prior to the steps forming methods 10a, 10b, 10c, the method performed by the image signal processor 20 comprises performing pre-processing of pixel intensity values. The intensity values may be obtained from an image sensor 82.

Image sensors may comprise an array of sensor elements, also referred to as sensor pixels. The sensor elements may each comprise a photosensitive element, also called a photosensor, for example a photodiode that can convert incident light into electronic signals or data. The sensor elements may comprise any photosensor suitable for capturing images. Further examples of sensor element photosensitive elements may include charge-coupled devices (CCDs) or complementary metal-oxide semiconductors (CMOSs). When capturing frames of image data, the image sensor 82 may be exposed to incident light for a predetermined period of time, called an exposure interval. Alternatively, the image sensor 82 may be continually exposed to incident light and signals from the sensor may be read over a given period of time which may also be referred to as an exposure interval. During this exposure, incident photons are converted into electrons by the photosensor and the charge may be stored by a capacitor. Each sensor element may further comprise circuitry configured to measure the charge stored by their respective capacitor and to convert the amount of charge stored to a digital value. The pixel intensity values may comprise these digital values. The pixel intensity values may represent at least one characteristic of the light captured by an image sensor 82. The pixel intensity values may be representative of an amount of light energy incident on each sensor element during the exposure interval, and the amount of light energy may be proportional to the number of photons captured by that sensor element. The pixel intensity values may represent a luminance of captured light, which is for example a measure of the energy per unit area rather than absolute energy. In other examples, the image data may be representative of a brightness of captured light, which may be considered to correspond to a perception of luminance, which may or may not be proportional to luminance. The image data may be representative of any photometric quantity or characteristic that may be used to represent the visual appearance of the images represented by the image data. The image data may be generated and/or stored in any suitable format, for example raw image format.

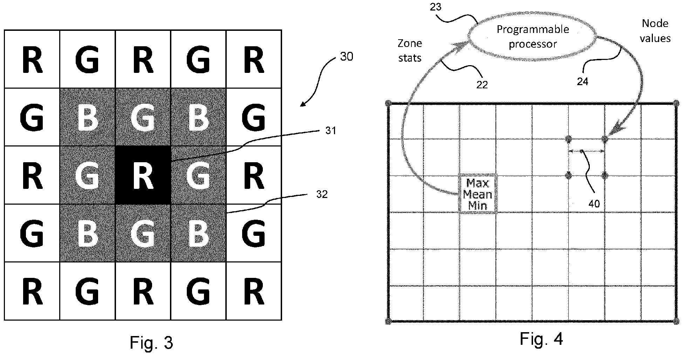

In the example method performed by the image signal processor 20, the image sensor 82 includes a colour filter array that includes a pattern of colour filter elements. Colour filter elements correspond to respective sensor pixels of an array of sensor pixels of the image sensor 82. For example, the colour filter array may form a mosaic or repeating pattern, such as the Bayer filter 30 illustrated in Figure 3, which illustrates an array of red (R), green (G) and blue (B) filters. A colour filter element generally allows light of a particular colour to pass through to the corresponding sensor pixel. In this way, the colour filter array allows different sensor pixels of the array of sensor pixels to receive different colours of incident light, allowing a full-colour image to be captured. As typical photosensors are not sensitive to the wavelength of incoming light, typical sensor pixels would be unable to provide colour information from the detected light without a colour filter array. However, by separating incoming light into different wavelength ranges, corresponding to different colours, using the colour filter array, the intensity of light in these different wavelength ranges can be ascertained, allowing this colour information to be determined.

It is to be appreciated that a colour may refer to any range of wavelengths of light. For example, a clear, transparent or white colour filter element may nevertheless be considered to be a colour filter element in the sense that the colour filter element allows these particular wavelengths (such as all or substantially all) wavelengths in the visible spectrum to be transmitted to the underlying sensor pixel. In other examples, some or all of the colour filter elements may be non-white colour filter elements.

In the example method performed by the image signal processor 20, the image signal processor 20 receives the Bayer pixel intensity values. A luminance computation block 21 processes the Bayer pixel intensity values to obtain luminance intensity values for each Bayer pixel. The luminance computation block 21 computes the luminance intensity value for a given Bayer pixel intensity value 31 by taking a weighted sum of the Bayer pixel intensity value 31 and the surrounding eight Bayer pixel intensity values 32, as shown in Figure 3. The luminance intensity value is representative of the luminance of captured light at the location of the Bayer pixel, summed across the wavelengths of light captured by the image sensor 82.

As mentioned, at step 12, the method comprises, for a plurality of zones of the image, determining, based on a plurality of pixel intensity values in the respective zone of the image, a value of a characteristic pertaining to the plurality of pixel intensity values.

An example image divided into a plurality of zones is illustrated in Figure 4. In this image, the zones are rectangular, and are all the same size. The image is a rectangular image comprising a plurality of rows of pixels which are represented by the pixel intensity values. Each zone comprises, for a subset of the rows of pixels, a portion of the row. In the example method performed by the image signal processor 20, the pixel intensity values used are the luminance intensity values calculated previously. In the example method performed by the image signal processor 20, the number of zone stats 22 (values of the characteristic) is fewer than the total number of pixel intensity values (referring to either the Bayer or luminance intensity values) in the image. In one example, there are 32 x 32 zones arranged in a rectangular grid across the image.

More generally, the pluralities of pixel intensity values in the respective zones may be disjoint sets of pixel intensity values. That is, the zones do not overlap with each other.

The values of the characteristic pertaining to the plurality of pixel intensity values are also referred to as zone stats 22 (zone statistics). The characteristic may comprise the maximum or minimum of the plurality of pixel intensity values, or an average (such as the mean or median) of the plurality of pixel intensity values, or another property of the plurality of pixel intensity values.

In the example method performed by the image signal processor 20, determining the zone stats 22 comprises receiving the pixel intensity values in a given sequence, and processing the pixel intensity values in this sequence to determine the zone stats 22. In this method, determining the zone stats 22 comprises, upon receiving a pixel intensity value, determining the zone to which the pixel intensity value belongs, and processing the pixel intensity value to determine, for the zone, a running value of the characteristic for the zone. This may be performed for a plurality, or all, of the pixel intensity values in the image.

In the example method performed by the image signal processor 20, the pixel intensity values are received in raster-scan order; that is, the pixel intensity values are received one-by-one from left to right in a given row, and then one-by-one from left to right in the next row. The pixel intensity values are processed in this order, and once a pixel has been processed, it is not processed again during step 12; that is, each pixel is only processed once during the determination of the zone stats 22. By processing the pixels in the order they are received, no pixel intensity values need to be stored in a buffer prior to processing.

For example, where the zone stats 22 represent the maximum pixel intensity value in each zone, a register may store a running value of the maximum pixel intensity value. When a new pixel intensity value for a pixel in the zone is received, it may be compared, using a comparator circuit in the fixed function circuitry, to the running maximum value. If the new pixel intensity value is greater than the running maximum value, the running maximum value may be updated to be the new pixel intensity value. If the new pixel intensity value is equal to or less than the running maximum value, no action may be taken; that is, it may be determined to not update the running maximum value. The pixel intensity values can be processed in a similar fashion to determine the minimum pixel intensity value.

As another example, where the zone stats 22 represent the mean pixel intensity value in each zone, a register may store a running total value of the pixel intensity values. When a new pixel intensity value for a pixel in the zone is received, it may be added, using an addition circuit in the fixed function circuitry, to the running total value. When all of the pixels for a zone have been processed, the running total value may be divided, using a division circuit in the fixed function circuitry, by the total number of pixels in the zone.

Neither of these examples requires storing any pixel values in a buffer to obtain the zone stats 22.

In the example method performed by the image signal processor 20, step 12 is implemented in hardware and performed using fixed function circuitry according to step 12a of method 10a. Fixed function circuitry, as referred to herein, may comprise dedicated hardware circuitry that is configured specifically to perform a fixed function, and that is not reconfigurable to perform a different function. In this way, the fixed function circuitry can be considered distinct from a programmable circuit that is configured to receive and decode instructions defined, for example, in a software program. For example, the fixed function circuitry used at step 12 may not be reconfigurable to perform a function other than determining the zone stats 22.

Fixed function circuitry may comprise at least one electronic circuit for performing an operation. For example, the fixed function circuitry may be configured to calculate the mean value for each zone in the way described above using an addition circuit and a division circuit. In this example, the addition circuit cannot be reconfigured to perform another function.

Any fixed function circuitry described herein may comprise application-specific integrated circuitry. The application-specific integrated circuitry may comprise one or more integrated circuits, and may be designed using a hardware description language such as Verilog and implemented as part of the fabrication of an integrated circuit. The application-specific integrated circuitry may comprise a gate array or a full custom design.

Fixed function circuitry is efficient, and quick to process the pixel intensity values, but lacks customisability. The lack of customisability does not pose a major issue in the context of the present invention, because collecting the zone stats 22 is an operation which is unlikely to need modification.

In the example method performed by the image signal processor 20, the method comprises determining, based on the values of the characteristic, an exposure value for use in capturing a subsequent image. For example, the mean intensity value for each zone may be compared with a first threshold. If the number of zones for which the mean intensity value exceeds the threshold is greater than a second threshold, the exposure value of the image sensor 82 (which may include the analogue gain, digital gain, exposure interval and/or aperture size) may be reduced to a reduced value, and the reduced value used to capture the subsequent image.

As mentioned, at step 14, the method comprises performing at least a spatial filtering process on data representative of the values of characteristic for the plurality of zones, to obtain filtered values of an image characteristic at respective locations. The spatial filtering process is performed using a programmable processor 23.

In the example method performed by the image signal processor 20, the programmable processor 23 comprises a processor 23 which can be programmed to perform a certain function. For example, the programmable processor 23 may comprise a central processing unit 23a, a microcontroller unit 23b, or a neural processing unit. The programmable processor 23 may be configured to receive and decode a plurality of instructions forming an instruction set, and to programmatically act upon those instructions.

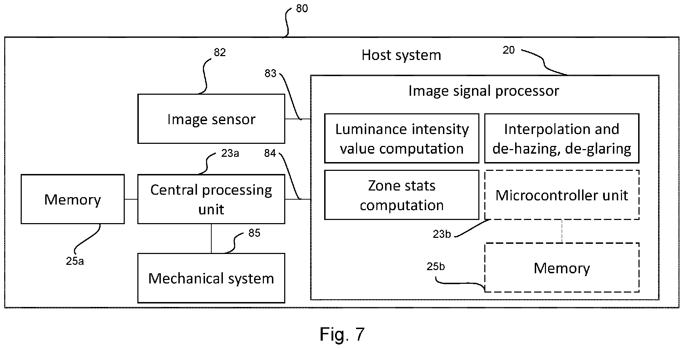

In the case of a central processing unit 23a, the processor 23 may be a processor 23a of a host system 80 that includes the image signal processor 20. Briefly referring to Figure 7, there is illustrated an example host system 80 that includes the image signal processor 20, the image sensor 82, and the central processing unit 23a. In this example, the image sensor 82 is configured to transfer the image data to the image signal processor via a bus 83.

The host system 80 may perform, in addition to image processing, other functions. For example, the host system 80 may be an autonomous driving system. The host system 80 may use the processed image data to detect objects in the image, and manoeuvre a vehicle, such as a car, based on the locations of the detected objects. The central processing unit 23a may perform, in addition to the image processing described herein, other functions, including the detection of objects and the transmission of instructions to a mechanical system 85 to manoeuvre the car. In one example, the image signal processor 20 is a system-on-a-chip which transmits, via a bus 84, the zone stats 22 to the central processing unit 23a. The central processing unit 23a performs the spatial filtering process, and transmits, via the bus 84, the filtered values back to the image signal processor 20.

In the case that the programmable processor 23 comprises a microcontroller unit 23b, the processor 23 may be a component of the image signal processor 20. The microcontroller unit 23b may be configured to only perform image signal processing functions, including the spatial filtering process. However, in this example, the microcontroller unit 23b can still be programmed or reprogrammed to run a specific, user-selected, spatial filtering process. It is in general capable of performing a variety of spatial filtering processes, in contrast with the fixed function circuitry, whose functionality in general cannot be altered.

In the example method performed by the image signal processor 20, performing the spatial filtering process comprises reading, by the processor 23, from a memory 25, a programmable algorithm, and executing the programmable algorithm using the zone stats 22 to obtain the filtered values. The programmable algorithm is, for example, a spatial filtering algorithm comprising a configurable set of instructions. In the case that the programmable processor 23 is a microcontroller unit 23b, the programmable processor may read the programmable algorithm from a memory 25b of the image signal processor 20, while in the case that the programmable processor 23 is the central processing unit 23a of the host system 80, the programmable processor 23 may read the programmable algorithm from a memory 25a of the host system 80.

In the example method performed by the image signal processor 20, the programmable processor 23 performs a dehaze and de-glare mapping that includes the spatial filtering process. The dehaze and de-glare mapping may be represented by the configurable set of instructions referred to above.

Haze, or fog, is an atmospheric condition in which an atmospheric pollutant, such as water droplets or dry particles suspended in the air, reflects or refracts a small amount of light towards the image sensor 82. Haze has the effect of adding a value to each luminance intensity value. Where the image contrast is defined as, for example, the maximum pixel intensity value divided by the mean pixel intensity value, haze has the effect of reducing the image contrast.

The amount of atmospheric pollutant between the image sensor 82 and an object in the image depends on where the object is. Hence, the extent to which haze affects a given pixel intensity value depends on the contents of a scene. For example, in astrophotography applications, where all objects in the scene are behind a relatively uniform "wall" of atmospheric pollutant, the contrast reduction caused by haze can be expected to be relatively uniform across the image. However, this depends on the field of view of the image sensor 82. If the image sensor 82 has a wide field of view, then light coming from directly above the image sensor 82 will pass through the "wall" at an angle perpendicular to the wall, while light coming from other directions will pass through the "wall" at an oblique angle, meaning that it will pass through a larger amount of atmospheric pollutant and hence have a greater contrast reduction. The effect of this would be reduced haze at a part of the image that represents the vertical direction. Meanwhile, in autonomous driving applications, the amount of atmospheric pollutant between the image sensor 82 and an object is in general directly proportional to the distance between the image sensor 82 and the object. Different objects in the image, even objects that are represented at pixel locations that are very close together, can therefore be affected by haze to very different extents. This again depends on the field of view of the sensor, because a sensor with a narrow field of view effectively captures a smaller scene, and hence the difference in haze between two adjacent pixel intensity values is expected to be smaller (if the total number of pixel intensity values is constant).

Thus, the spatial distribution of haze can depend on the field of view of the sensor and the contents of the scene.

Glare is a phenomenon in which a bright light source causes reduced image contrast. A bright light source will in general add values to the luminance intensity values, as is the case with haze.

As with haze, the spatial distribution of glare across an image can vary a lot between different images. For an image of a scene that includes a light source, the pixel locations near the light source will experience greater contrast reduction than pixel locations further from the light source. Glare also depends on the arrangement of lenses and mirrors in the image sensor 82, as scattering from these components can contribute to glare.

There is thus a large number of factors that can affect haze and glare. The present invention offers mappings for reducing haze and glare. The present invention, however, does not deal with haze and glare using a "one-size-fits-all" approach, such as purely using fixed function circuitry to perform the dehaze and de-glare mapping. Instead, in the example method performed by the image signal processor 20, the programmable processor 23 performs the dehaze and de-glare mapping. The dehaze and de-glare mapping comprises adjusting the image contrast at the respective locations in the image. The dehaze and de-glare mapping takes the zone stats 22 as input and outputs filtered values of image contrast. We now describe some example mappings.

In some examples, the programmable processor 23 receives an input, via an input interface from a user of a camera that includes the image sensor 82 and the image signal processor 20, of a scene type or a photography purpose. The input comprises an indication that the photography purpose comprises, for example, astrophotography, outdoor photography, or indoor photography.

In the case of astrophotography, in one example, the spatial filtering process comprises identifying a zone (or node, as referred to below) associated with the vertical direction. This may be performed by, for example, determining a distribution of contrast across the image. For example, the contrast could be determined for each zone. The contrast of a zone can be defined as the maximum intensity value of a zone divided by the mean intensity value of the zone, or the difference between the maximum and minimum intensity values divided by the mean intensity value, the maximum intensity value divided by the minimum intensity value, or the difference between the mean and minimum intensity values divided by the mean intensity value. If the contrast value has a maximal value in one zone and decreases with distance from this zone, the zone containing the maximal value can be determined as the zone associated with the vertical direction. The spatial filtering process may comprise applying a contrast raising function which is, for example, a linear or reciprocal cosine function of the Euclidean distance, in zones (or nodes, discussed below), between a given zone and the zone containing the maximal contrast value. The gradient of the contrast raising function 50 can be calculated from the field of view of the image sensor 82; for example, the gradient may be linear with the field of view of the image sensor 82. The precise way in which the contrast raising function 50 can be used is described in detail below.

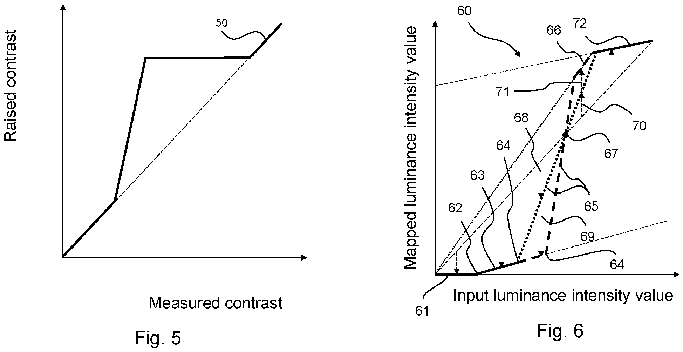

In the case of indoor photography, there is unlikely to be any haze in the image; however, the image is likely to include a plurality of light sources causing glare. It may be difficult to predict the locations of the light sources. In autonomous driving, the objects in the image may be affected by haze and glare to very different degrees, and there is unlikely to be a predictable distribution of haze and glare across the image. Hence, the contrast raising function 50 to be used for indoor photography or autonomous driving may be the function illustrated in Figure 5. The y-axis shows the raised contrast, and the x-axis shows the measured contrast.

The rationale for this function is as follows. Zones (or nodes) having contrast above an upper threshold are unlikely to have been affected substantially by haze or glare, and hence the contrast is not raised for these zones. For zones having contrast below a lower threshold, there is insufficient detail to estimate the degree of haze or glare, and raising the contrast in these zones is likely to increase noise, particularly for dark zones, so the contrast is not raised for these zones. The lower threshold can be determined based on a gain value of the image sensor 82 (which may be a digital gain value, an analogue gain value, or a value resulting from both digital and analogue gain). An image sensor 82 having a higher gain value is likely to have more noise, and hence determining the lower threshold based on the gain value enables the contrast raising function 50 to be adapted appropriately to raise the contrast for regions affected by haze or glare, without excessively exacerbating noise. For zones having contrast between the upper threshold and the lower threshold, the spatial filtering process may comprise applying the contrast raising function 50 shown in Figure 5 to obtain a raised contrast value.

In the specific case of autonomous driving, a neural network may be applied to a previous image to detect objects in that image, such as pedestrians and other vehicles. In order to ensure that such objects continue to be visible, the spatial filtering process may comprise raising the contrast of these objects. For a zone that, in the previous image, contained an object or part of an object, the contrast obtained from the contrast raising function 50 in Figure 5 may be raised by a fixed value to obtain the raised contrast value. For a zone that did not contain an object in the previous image, the contrast obtained from the contrast raising function 50 in Figure 5 may be maintained. In the case of outdoor photography, in one example, the programmable processor 23 receives, as additional input, the time of day. During daytime, the sun is likely to be a large source of glare. It may thus be pertinent to detect the position of the sun. The spatial filtering process may comprise determine the zone that has the highest mean pixel intensity value. The situation here is similar to that described in the case of astrophotography: the closer a zone is to the zone having the highest mean pixel intensity value, the higher its contrast reduction is likely to be. In this case, the contrast reduction occurs due to glare, rather than haze. The programmable processor 23 may use a contrast raising function like that described with reference to the astrophotography application.

Alternatively, in examples in which the processor 23 is a neural processing unit, the spatial filtering process may comprise reading, from a memory 25, data representing a neural network, and applying the neural network to the zone stats 22 to obtain the filtered values. For example, a spatial filtering macro-neural network may take as input the zone stats 22, and additional information relating to the locations of objects in the image, as described above. The macro-neural network may output filtered values of an image characteristic (for example the gradient value referred to below) at respective locations in the image, for example filtered values of the gradient referred to below, based on the zone stats 22. The macro-neural network may comprise a plurality of micro-neural networks which each perform spatial filtering to obtain filtered values at locations in respective regions of the image. The respective regions may each comprise one or more of the zones. The macro-neural network may receive input from the host system 80, such as from a neural network of the host system 80, where the vehicle comprises the image sensor 82 whose output is processed by the image signal processor 20. The input received from the host system 80 may comprise data representing, for each said region of the image, objects that are present in the region. The objects may include, for example, pedestrians, other cars, the road, and the sky. The macro-neural network may be configured to enable or disable a micro-neural network, based on objects that are present in the respective region for the micro-neural network. For example, where a region contains a pedestrian, the macro-neural network may disable the micro-neural network for that region. As another example, where a region contains the sky and no other objects, the macro-neural network may enable the micro-neural network for that region. By using neural networks to perform the spatial filtering, the spatial filtering process can be made more adaptive to conditions observed in different images. This can be particularly useful for image sensors that output images for which there is a wide range of degrees of glare and haze (at different points in one image and across different images).

In any case, in the example method performed by the image signal processor 20, raised contrast values are obtained for each zone.

By using a programmable processor 23 to perform the spatial filtering process, the spatial filtering process can be flexible to the requirements of the image. For example, if an image sensor 82 is used in a variety of contexts, it may be suitable to reprogram the spatial filtering process appropriately. While fixed function circuitry is in general more efficient and cheaper, and processes data more quickly than programmable processors 23, due to the potential complexity of a spatial filtering process, it is possible that bugs may occur, or that other adjustments to the spatial filtering process are desired. By using a programmable processor 23, the spatial filtering process can be updated appropriately. In some examples, the method comprises programmatically configuring an algorithmic step of the spatial filtering process.

In the example method performed by the image signal processor 20, the spatial filtering process includes the transformation of the zone stats 22 to a mesh of values of the image characteristic. The mesh consists of the points at which boundaries of the zones intersect with each other. In this method, the mesh consists of a grid of points of dimensions equal to the number of zones in the horizontal direction plus 1 x the number of zones in the vertical direction plus 1. The values of the image characteristic are the values of the image characteristic at these points.

In the example method performed by the image signal processor 20, for each point, or "node", the zone stats 22 of the zones whose boundaries intersect at that point are used as inputs to the spatial filtering process. In the case of the rectangular grid in this method, the four zones nearest to the node are used as the inputs. To obtain the mean intensity value at a node, the mean of the mean intensity values of the surrounding four zones can be used. To obtain the maximum value, the maximum of the maximum intensity values of the surrounding four zones can be used. To obtain the minimum value, the minimum of the minimum intensity values of the surrounding four zones can be used.

To obtain the contrast at a node, for example, the difference between the maximum value at the node and the minimum value at the node can be divided by the mean value at the node. The contrast raising function 50 can be applied to the node contrast values. Alternatively, the contrast raising function 50 can be applied to the zonal contrast values (being e.g. the difference between the maximum and minimum intensity values in a given zone, divided by the mean intensity value in the given zone) to obtain zonal raised contrast values, and the zonal raised contrast values of the surrounding four zones can be averaged to obtain the raised contrast value at a given node.

In the example method performed by the image signal processor 20, the spatial filtering process comprises applying a spatial filter to the node values 24 to obtain intermediate node values. For example, the following filter can be applied to the node values 24.

$$\begin{pmatrix} 1 & 2 & 1 \\ 2 & 4 & 2 \\ 1 & 2 & 1 \end{pmatrix}/16$$

That is, for a given node, the node value 24 (being e.g. the maximum value, minimum value, or mean value at a node) at that node is multiplied by four. The node values 24 of the nodes immediately above, immediately below, immediately to the left, and immediately to the right, are each multiplied by two. The node values 24 of each of the nodes immediately to the diagonal upper left, immediately to the diagonal upper right, immediately to the diagonal lower left, immediately to the diagonal lower right, are each obtained. These values are added together and divided by 16 to obtain the intermediate node value for the given node.

The spatial filter may be determined based on the field of view of the image sensor 82. For example, where the field of view of the image sensor 82 is small, the filter may include contributions from node values 24 of nodes that are further away from the given node.

In the example method performed by the image signal processor 20, the raised contrast values for each zone are inputted to a further function to obtain an intermediate filtered (i.e. node) value of a gradient to be used in a contrast stretching function 60 (described later). In the case that the contrast value for a zone is calculated as the mean intensity value of a zone divided by the minimum intensity value for the zone, the further function may be:

$$gradient = \frac{\left(\sqrt{interp(raised\ contrast)} - 1\right) \times Mean}{\sqrt{interp(rarget\ contrast)} \times (Mean - Min)},$$

where *min* and *mean* are respectively the intermediate minimum and mean intensity value determined for a node, and *interp*(*raised contrast*) is, for a given node, the mean of the raised contrast values for the zones that intersect at that node. In the case that the contrast value is calculated as the difference between the maximum and minimum intensity values

$$gradient = interp\left(\sqrt{\frac{raised\ contrast\ value}{input\ contrast\ value}}\right).$$

divided by the mean intensity value, the further function may be:

In the case that the image sensor 82 is recording a video comprising a previous image in addition to the current image, final node values of the gradient may be obtained by applying a temporal filter to the final (or intermediate) node values in the previous image and the intermediate node values of the current image. For example, the final node value of the gradient for a given node of the current image may be calculated as a linear combination of the intermediate node value of the gradient of the current image with the final node value of the gradient for the previous image. In the example method performed by the image signal processor 20, the temporal filter is only applied to the node values of the gradient, and not the node mean intensity values.

In any case, filtered values of an image characteristic at respective locations are obtained. In the example method performed by the image signal processor 20, the filtered values are the final node values of the gradient.

As mentioned, the method comprises, at step 16, interpolating from the filtered values to determine a local value of the image characteristic at a said pixel location 40. For example, the final node values of the gradient obtained at step 14 may be interpolated to determine a local gradient value at the said pixel location 40, and the node mean intensity values obtained at step 14 may be interpolated to determine a local mean intensity value 67 at the said pixel location 40.

In the example method performed by the image signal processor 20, step 16 is performed using fixed function circuitry according to step 16b of method 10b. In this method, the fixed function circuitry used to perform step 16 comprises a different set of circuits to the fixed function circuitry used to perform step 12. For example, the fixed function circuitry used to perform step 16 may be configured to calculate the interpolated value using an interpolation circuit. The interpolation circuit may comprise one or more addition circuits.

In the example method performed by the image signal processor 20, both steps 12 and 16 are performed using fixed function circuitry. However, in some examples, only step 12, or only step 16, is performed using fixed function circuitry.

The interpolation may comprise linear interpolation. For example, the interpolation may comprise bilinear interpolation from four filtered values, such as the filtered values at the four nodes closest to a pixel. The interpolation may be performed for a plurality, or all, of the pixel locations in the image.

Continuing with the example method, the final node values of the gradient have been obtained for each node in the mesh of Figure 4. A specific example of how the node values of the gradient can be used to obtain modified pixel intensity values is described with reference to Figure 6. The node values of the gradient may be interpolated and the local gradient values used as a gradient of a contrast stretching function 60. The contrast stretching function 60 is illustrated in Figure 6. The contrast stretching function 60 is calculated from the luminance intensity value for the pixel at the said pixel location 40 according to the curve illustrated in Figure 6, and applied to the Bayer pixel intensity value 31 for a pixel at the said pixel location 40, for example by multiplying the Bayer pixel intensity value 31 by the mapped luminance intensity value and dividing the result by the input luminance intensity value. In the example method performed by the image signal processor 20, the calculation of the contrast stretching function 60, and the application of the contrast stretching function 60 to the Bayer pixel intensity value 31, are performed using fixed function circuitry.

In the example method performed by the image signal processor 20, the input luminance intensity value used to calculate the mapped luminance pixel intensity value is an input luminance pixel intensity value, at the said pixel location 40, of a subsequent frame captured by the image sensor 82, for example the immediately subsequent frame. The ratio of the mapped to input luminance pixel intensity values is multiplied by the Bayer pixel intensity value 31 for a pixel at the said pixel location 40 of the immediately subsequent frame, to obtain a mapped Bayer pixel intensity value. The contrast stretching function 60 could be applied to the current frame, but even when using fixed function circuitry to perform the zone stats 22 collection of step 12 and the interpolation of step 16, the time taken to calculate the contrast stretching function 60 may be unacceptable for some applications such as autonomous driving. By applying the contrast stretching function 60 to the Bayer pixel intensity value 31, at the said pixel location 40, of a subsequent frame, a mapped Bayer pixel can be outputted very quickly after the input Bayer pixel is measured.

We now describe the contrast stretching function 60. Essentially, the contrast stretching function 60 does not change the luminance intensity value if the luminance intensity value is equal to the local mean intensity value 67; if the luminance intensity value is lower than the local mean intensity value 67 but greater than zero, the contrast stretching function 60 reduces the luminance intensity value (as shown by arrows 68 and 69); and if the luminance intensity value is higher than the local mean intensity value 67 but lower than the maximum possible input luminance intensity value, the contrast stretching function 60 raises the luminance intensity value (as shown by arrows 70 and 71); and if the luminance intensity value is zero or the maximum possible input luminance intensity value, then the contrast stretching function 60 does not change the luminance intensity value.

The contrast stretching function 60 includes firstly a flat horizontal section 61 from the origin up to a first input luminance intensity value 62, where the input luminance intensity value is mapped to 0 or another constant value. One purpose of the flat section 61 is to remove noise in very dark regions of the image: below the first input luminance intensity value 62, the Bayer pixel intensity value 31 is likely to be so dark that it represents nothing but noise (e.g. read noise). Another purpose is to make greater use of the possible range of values that the Bayer pixel intensity value 31 can take: the mapped Bayer pixel intensity value 31 can only take on a finite set of values (this being limited by, for example, the maximum permitted brightness of a display apparatus used to display the processed image), and in order to improve the usage of this range of values (i.e. to allow better distinguishment between different levels of brightness in the image), it is sensible to set, as the lowest output brightness, a pixel representing the level of light at which there is reasonable certainty that the pixel does not represent purely noise.

The contrast stretching function 60 includes a lower piece 63. The lower piece 63, like all pieces of the contrast stretching function 60, has a positive gradient which does not vary along the piece. The lower piece 63 runs from the first input luminance intensity value 62 up to a second input luminance intensity value 64. The gradient of the lower piece 63 is a fixed parameter of the contrast stretching function 60, in the sense that it does not depend on the local gradient value or the local mean intensity value 67.

The contrast stretching function 60 includes a middle piece 65 which runs from the second input luminance intensity value 64 to a third input luminance intensity value.

The gradient of the middle piece 65 is equal to the local gradient value. Therefore, when the input luminance intensity value is between the second input luminance intensity value 64 and the third input luminance intensity value, the amount of contrast stretching that is applied depends on the calculated gradient value. The gradient value, as described above, can be calculated based on the expected level of haze or glare in the region of the pixel. Thus, for example, in a region identified as having high glare (for example a region near the sun) or high haze, the contrast is stretched more: higher Bayer pixel intensity values are multiplied by a greater amount (as shown by arrow 71), and lower Bayer pixel intensity values are multiplied by a smaller amount (as shown by arrow 69), than for a region identified as having low glare or low haze (as shown by arrows 68 and 70). This counteracts the contrast reduction caused by glare or haze.

The middle piece 65 is positioned such that, if the input luminance intensity value is equal to the local mean intensity value 67 at that pixel location 40, the Bayer pixel intensity value 31 is unaffected. That is, the middle piece 65 passes through the point with coordinates equal to (local mean intensity value 67, local mean intensity value 67). The purpose of this is to prevent the mean intensity value in a region of the image from being altered by the contrast stretching function 60. The purpose of the contrast stretching function 60 is only to make dark regions appear darker and bright regions appear brighter.

As stated previously, in the example method performed by the image signal processor 20, the node gradient values are subjected to temporal filtering, but the node mean intensity values are not. The temporal filtering is intended to smooth the appearance of the image where there is motion between frames: without the temporal filtering, the contrast stretching applied to a region of the image may change suddenly and appear unnatural. However, applying the temporal filtering to the node mean intensity values could cause the contrast stretching function 60 to alter the mean intensity value in a given region (due to mismatch between the node mean intensity value of the previous frame and the node mean intensity value of the current frame), which is not the intention of the contrast stretching function 60.

In some examples, the contrast stretching function 60 includes a gain-limiting piece 66 which runs from the third input luminance intensity value to a fourth input luminance intensity value. The gradient of the gain-limiting piece 66 may be calculated based on the local maximum value *max,* for example the interpolated value, at the said pixel location 40, of the maximum intensity values at the four nodes surrounding the said pixel location 40. For example, the gradient of the gain-limiting piece 66 may be calculated as follows:

$$gradient \; (gain \; limiting \; piece) = \frac{(max - 2^{\mathrm{dwFW}}) \times \mathrm{upper\_grad} + 2^{\mathrm{dwFW}}}{max} \, .$$

Here, dwFW is the number of bits used to store *max,* and upper_grad is the gradient of the upper piece 72, described below. In this example, when extrapolated, the gain-limiting piece intersects the origin.

In regions of the image in which the local luminance distribution has strong positive skew, i.e. the local mean value is near the local minimum value, the brighter detail of the image (mapped using the upper piece 72 described below) can be mapped to a very small range of mapped luminance intensity values, if the contrast stretching function 60 includes the middle piece 65 and the upper piece 72 but not the gain-limiting piece 66. This can result in colour banding. To address this issue, the gain-limiting piece 66 limits the contrast stretching that is applied to brighter parts of such a region, so that the brighter detail is not reduced to such a small range of mapped luminance intensity values.

The contrast stretching function 60 includes an upper piece 72 which runs from the end of the middle piece 65 (in examples that do not include the gain-limiting piece), or the end of the gain-limiting piece 66 (if it is included), to the maximum possible input luminance intensity value. The gradient upper_grad, and position of the upper piece 72, are fixed parameters of the contrast stretching function 60, in the sense that they do not depend on the local gradient value or the local mean intensity value 67.

The mapped luminance intensity value may be determined as max (lower piece 63, min (middle piece 65, upper piece 72)). In examples which include the gain-limiting piece 66, the mapped luminance intensity value may be determined as max (lower piece 63, min (middle piece 65, gain-limiting piece 66, upper piece 72). As stated above, the Bayer pixel intensity value 31 may be multiplied by the mapped luminance intensity value and divided by the input luminance intensity value, to obtain the mapped Bayer pixel intensity value.

In some examples, the contrast raising function 50, the contrast stretching function 60, and/or the mapped Bayer pixel intensity values are evaluated using fixed function circuitry.

The methods described herein refer to a contrast stretching function 60 that is used to reduce the effects of glare and haze on an image. However, methods 10a, 10b and 10c have other applications. For example, the local mean intensity value 67 may be used to model noise occurring in the region of the pixel. For example, shot noise is a type of noise caused by the random nature of photons arriving at a pixel. The number of photons arriving at a pixel in a given time interval is randomly distributed, with a variance equal to the mean. The effect of shot noise on a pixel intensity value thus depends on the brightness of the object represented by the pixel. However, it would be inappropriate to model shot noise for a given pixel based on only the pixel intensity value of that pixel, precisely because the pixel may be massively affected by shot noise. Therefore, the local mean intensity value 67 can be used to model the shot noise; since it is calculated from a plurality of pixel intensity values, the effect of shot noise on the local mean intensity value 67 is expected to be minimal.

In any case, methods 10a, 10b and 10c comprise determining a local value of an image characteristic at a pixel location 40.

The method described herein is an efficient yet customisable method for determining the local value. The invention takes advantage of the fact that computing zone stats 22 and interpolating from node values 24 are fixed operations which do not need to be customised, and hence implements these operations using fixed-function hardware, which can be faster and more energy efficient than a general purpose processor. Meanwhile, the invention enables a wide variety of spatial filtering processes to be used appropriately, by implementing these steps using a programmable processor.

Furthermore, in terms of memory requirements, the present method for determining a local value of a characteristic compares favourably with other methods. For example, some methods for determining a local mean intensity value 67 at a pixel location 40 involve multiplying the values of each pixel in a circle of a radius of ten pixels centred on the pixel location 40, by corresponding values of a convolution filter, and adding the results together (where the total of the values in the convolution filter is equal to 1). This, however, requires storing 100 pixel values. When determining the local mean intensity value 67 for every pixel in an image, 20 rows of pixels need to be stored at a time. This requires allocating memory space on the image signal processor 20 to store these rows of pixels.

In contrast, in the present invention, the zone stats 22 are calculated by processing the pixel intensity values in the order in which they are received. Indeed, since each pixel intensity value only needs to be processed once to determine the zone stats 22 for a given characteristic such as the mean, the present invention avoids the need to store multiple rows of pixels at a time. The interpolation performed at step 16 can be implemented by storing only four node values 24. Therefore, the present invention enables the calculation of a local value of a characteristic using minimal memory.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A method for processing an image comprising image data, the image data comprising pixel intensity values, said pixel intensity values being associated with respective pixel locations, the method comprising:

    for a plurality of zones of the image, determining, based on a plurality of pixel intensity values in the respective zone of the image, a value of a characteristic pertaining to the plurality of pixel intensity values;
    performing at least a spatial filtering process on data representative of the values of the characteristic for the plurality of zones, to obtain filtered values of an image characteristic at respective locations; and

interpolating from the filtered values to determine a local value of the image characteristic at a said pixel location, wherein the determining and/or the interpolating is performed using fixed function circuitry, and the spatial filtering process is performed using a programmable processor.

2. The method of claim 1, wherein the fixed function circuitry comprises hardware circuitry to form part of an integrated circuit.

3. The method of claim 1 or claim 2, wherein the programmable processor is configured to decode a plurality of instructions forming an instruction set.

4. The method of any one of claim 1 to claim 3, wherein performing the spatial filtering process comprises:

reading, by the processor, from a memory, a programmable algorithm; and
executing, by the processor, the programmable algorithm using the data representative of the values of the characteristic pertaining to the pluralities of pixel intensity values, to obtain the filtered values.

5. The method of claim 1 or claim 2, wherein the processor comprises a neural processing unit, and performing the spatial filtering process comprises performing, by the neural processing unit:

reading, from a memory, data representing a neural network; and
applying the neural network to the values of the characteristic pertaining to the pluralities of pixel intensity values, to obtain the filtered values.

6. The method of any one of claim 1 to claim 5, comprising interpolating from the local values to determine local values of the image characteristic at a plurality of said pixel locations.

7. The method of any one of claim 1 to claim 6, wherein the interpolating comprises bilinear interpolation using four of the filtered values.

8. The method of any one of claim 1 to claim 7, wherein the pluralities of pixel intensity values in the respective zones are disjoint sets of pixel intensity values.

9. The method of any one of claim 1 to claim 7, wherein determining the values of the characteristic pertaining to the pluralities of pixel intensity values comprises:

receiving the pixel intensity values in a given sequence; and
processing the pixel intensity values in the given sequence to determine the values of the characteristic.

10. The method of any one of claim 1 to claim 9, wherein the image characteristic comprises contrast.

11. The method of claim 10, comprising applying contrast stretching to a target pixel intensity value based on the local value of the contrast at the said pixel location.

12. The method of any one of claim 1 to claim 11, wherein both the determining and the interpolating are performed using fixed function circuitry.

13. The method of any one of claim 1 to claim 12, wherein determining the values of the characteristic pertaining to the pluralities of pixel intensity values is performed using fixed function circuitry, and the method comprises determining, based on the values of the characteristic, an exposure value for use in capturing a subsequent image.

14. A system comprising fixed function circuitry and a programmable processor, the system being configured to perform the method of any one of claim 1 to claim 13, wherein the system is configured to determine the values of the characteristic pertaining to the pluralities of pixel intensity values using the fixed function circuitry, and to perform the spatial filtering process using the programmable processor.

15. A system comprising fixed function circuitry and a programmable processor, the system being configured to perform the method of any one of claim 1 to claim 13, wherein the system is configured to interpolate from the filtered values using the fixed function circuitry, and to perform the spatial filtering process using the programmable processor.

for a plurality of zones of the image, determining, based on a plurality of pixel intensity values in the respective zone of the image and using fixed function circuitry, a value of a characteristic pertaining to the plurality of pixel intensity values | 10a

12a

performing, using a programmable processor, at least a spatial filtering process on data representative of the values of the characteristic for the plurality of zones, to obtain filtered values of an image characteristic at respective locations | 14

interpolating from the filtered values to determine a local value of the image characteristic at a said pixel location | 16

Fig. 1a

| for a plurality of zones of the image, determining, based on a plurality of pixel intensity values in the respective zone of the image, a value of a characteristic pertaining to the plurality of pixel intensity values | <u>10b</u> 12 |

| performing, using a programmable processor, at least a spatial filtering process on data representative of the values of the characteristic for the plurality of zones, to obtain filtered values of an image characteristic at respective locations | 14 |

| interpolating from the filtered values to determine a local value of the image characteristic at a said pixel location, using fixed function circuitry | 16b |

Fig. 1b

for a plurality of zones of the image, determining, based on a plurality of pixel intensity values in the respective zone of the image and using fixed function circuitry, a value of a characteristic pertaining to the plurality of pixel intensity values

10c

12a

performing, using a programmable processor, at least a spatial filtering process on data representative of the values of the characteristic for the plurality of zones, to obtain filtered values of an image characteristic at respective locations

14

interpolating from the filtered values to determine a local value of the image characteristic at a said pixel location, using fixed function circuitry

16b

Fig. 1c

Fig. 2

Fig. 3

Fig. 4

Fig. 5

Fig. 6

Fig. 7

Europäisches
Patentamt

European
Patent Office

Office européen
des brevets

# EUROPEAN SEARCH REPORT

**Application Number**

EP 23 21 3162

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/073957 A1 (SLABAUGH GREGORY [GB] ET AL) 11 March 2021 (2021-03-11) | 1-12,14, 15 | INV. G06T1/20 |
| Y | * the whole document * | 1,14,15 | G06T3/4015 |
| A | * claims 1,4,5 * | 13 | G06T5/00 |
| | * paragraphs [0020], [0041] * | | G06T5/70 |
| | * paragraphs [0063], [0065] * | | G06T5/73 |
| | * paragraph [0079] * | | G06T5/90 |
| | * paragraphs [0087], [0089] * | | G06T5/94 |
| | ----- | | H04N19/00 |
| Y | US 2021/342987 A1 (GUÉRIN GUILLAUME MATTHIEU [FR] ET AL) 4 November 2021 (2021-11-04) | 1,14,15 | H04N19/42 H04N23/84 H04N1/407 |
| A | * the whole document * | 13 | H04N1/409 |
| | * claim 11 * | | |
| | * paragraph [0069] * | | |
| | * paragraphs [0078] - [0079] * | | |
| | * paragraphs [0106], [0108] * | | |
| | ----- | | |
| Y | US 2020/265551 A1 (RASMUSSON JIM [SE] ET AL) 20 August 2020 (2020-08-20) | 1,14,15 | |
| A | * the whole document * | 13 | **TECHNICAL FIELDS SEARCHED (IPC)** |
| | * paragraphs [0001], [0052] * | | |
| | ----- | | H04N |
| Y | US 2019/220963 A1 (POPOVIC VLADAN [US] ET AL) 18 July 2019 (2019-07-18) | 1,14,15 | G06T |
| A | * the whole document * | 13 | |
| | * paragraphs [0031], [0052] * | | |
| | ----- | | |

The present search report has been drawn up for all claims

| Place of search | Date of completion of the search | Examiner |
|---|---|---|
| The Hague | 24 April 2024 | Thollot, Julien |

EPO FORM 1503 03.82 (P04C01)

## ANNEX TO THE EUROPEAN SEARCH REPORT
## ON EUROPEAN PATENT APPLICATION NO.

**EP 23 21 3162**

This annex lists the patent family members relating to the patent documents cited in the above-mentioned European search report.
The members are as contained in the European Patent Office EDP file on
The European Patent Office is in no way liable for these particulars which are merely given for the purpose of information.

**24-04-2024**

| Patent document cited in search report | | Publication date | Patent family member(s) | | Publication date |
|---|---|---|---|---|---|
| US 2021073957 | A1 | 11-03-2021 | CN | 113228094 A | 06-08-2021 |
| | | | EP | 3891693 A1 | 13-10-2021 |
| | | | US | 2021073957 A1 | 11-03-2021 |
| | | | WO | 2020126023 A1 | 25-06-2020 |
| US 2021342987 | A1 | 04-11-2021 | CN | 113168672 A | 23-07-2021 |
| | | | EP | 3867860 A1 | 25-08-2021 |
| | | | US | 2021342987 A1 | 04-11-2021 |
| | | | WO | 2020081126 A1 | 23-04-2020 |
| US 2020265551 | A1 | 20-08-2020 | US | 2020265551 A1 | 20-08-2020 |
| | | | WO | 2017125162 A1 | 27-07-2017 |
| US 2019220963 | A1 | 18-07-2019 | CN | 111757080 A | 09-10-2020 |
| | | | US | 2019220963 A1 | 18-07-2019 |

EPO FORM P0459

For more details about this annex : see Official Journal of the European Patent Office, No. 12/82